# EUROPEAN PATENT APPLICATION

(11) **EP 2 141 594 A2**
(43) Date of publication of application: **06.01.2010**
(21) Application number: 09251648.3
(22) Date of filing: 25.06.2009
(51) Int. Cl.: G06F 9/50, G06F 9/46, A63F 13/10

(54) **Vectorized parallel collision detection pipeline**

(30) Priority: 30.06.2008 US 215922
(71) Applicant: Intel Corporation, Santa Clara, CA 95052 (US)
(72) Inventor: Bader, Aleksey A., Nizhni Novgorod - 603098 (RU); Lyalin, Sergey, Nizhni Novgorod - 603083 (RU)
(74) Representative: Beresford, Keith Denis Lewis

(57) **Abstract**

A parallel collision detection pipeline may perform a physics simulation using multicore processors. Potentially colliding objects may be grouped based on object type in a narrow phase collision detection phase. Parallel spatial hashing may be used in the broad phase collision detection in some embodiments.

## Description

### Background

This relates generally to physics simulation pipelines. Physics simulation pipelines enable relationships between objects to be quantized for computer analysis.

Physics simulations are used in a variety of computer operations where images of objects interact with one another in realistic fashion. For example, in video games where images interact, it is desirable to use a physics simulation pipeline to show how the devices interact. For example, if an image shows two cars colliding, the physics simulation pipeline can show a realistic depiction of the result of the collision.

In a physics simulation pipeline, there is a geometrical phase that includes a parallel collision detection pipeline. A parallel collision detection pipeline takes information at positions, rotations, and velocities of body geometries and produces a set of contact points. Joints between bodies are created for some or all contact points. This set of joints is used in force computation and physical simulation stages to develop computer forces applied to bodies and to simulate correct body movement in response to those forces.

Collision detection is a phase of a physics simulation pipeline, responsible for detecting contact points between objects in a modeled scene. Each object in the scene is represented by some geometric shape with physics characteristics such as mass.

The collision detection phase usually includes a broad phase and a narrow phase. The broad phase detects pairs of objects with possible contacts between them in the scene of interest. Each of these pairs of objects goes to a narrow phase for exact contact detection. So the aim of the broad phase is to reduce the number of pairs of objects for narrow phase analysis.

The output of the collision detection phase is the contact points between the objects in the object pair. Each contact point is defined by its three-dimensional coordinates in the scene and by pointers to two associated contacting objects. Usually a contact point contains some additional information that helps to accurately perform collision resolution. A joint is a special structure that describes contact points between two bodies as a constraint for the next physics stage, called the physics solver, that does collision resolution. The physics solver attaches additional forces to bodies. These additional forces prevent objects from penetration in the scene.

### Brief Description of the Drawings

Figure 1 is a schematic depiction of one embodiment of the present invention;
Figure 2 is a depiction of a grid with two axis aligned bounding boxes on different grid levels in accordance with one embodiment;
Figure 3 is a depiction of an axis aligned bounding box at the i+2 level and the cells that fit within it in accordance with one embodiment;
Figure 4 is a depiction of an axis aligned bounding box at the i+1 level and the cells that fit within it; and
Figure 5 is a flow chart for one embodiment of the present invention.

### Detailed Description

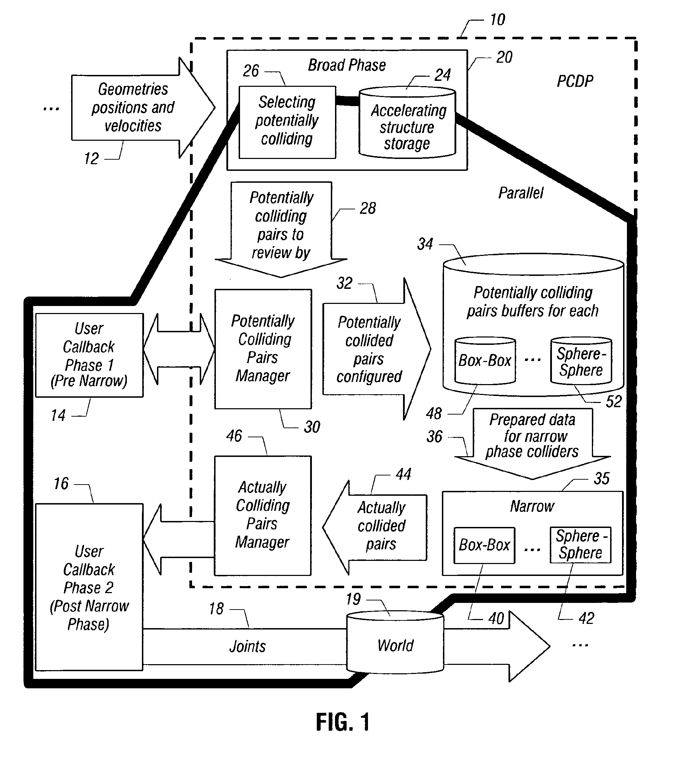

Referring to Figure 1, a vectorized, parallel collision detection pipeline 10 is depicted. By "vectorized", it is intended to refer to transforming a sequence of identical arithmetical operations into a single instruction. A single instruction may then be used for repeatedly processing multiple vectorized data sets. Thus, vectorization is the process of reorganizing a program so that a compiler can use vectors. Vectors are groups of numbers in memory arranged in one dimensional order.

Single instruction multiple data (SIMD) processors, also called vector processors, perform a single operation repeatedly on the same type of mathematical data. The single instruction multiple data processor exploits parallelism by vectorization of a loop that performs a single operation repeatedly and in parallel on similarly arranged sets of the data. Data parallelism can be exploited on vector processors and single instruction multiple data processors that work with lots of data at the same time so that mathematical operations on multiple data elements may be performed simultaneously.

Thus, in some embodiments, the parallel collision detection pipeline 10 is adapted for single instruction multiple data processors. The pipeline 10 can exploit the parallelism of a SIMD processor and enables the single instruction multiple data processor to work with the data most efficiently without unnecessarily repacking or rearranging the data. Thus, the single instruction multiple data processor can efficiently process appropriately grouped sets of data in a more efficient way.

A set of contact joints produced by user code, such as a game program, relies on information about contact points between image bodies. Particularly, collision detection uses body positions and corresponding depth of penetration information. This information is delivered to a user defined code by the parallel collision detection pipeline 10 in Figure 1 through a collision detection user interface. The user code can create a contact joint for each contact point detected by collision detection. The parallel collision detection pipeline architecture may be optimized for such behavior. The user's code is called while the collision detection pipeline is working.

In the broad phase 20, the collision detection algorithm works on data in parallel and the contact joints are created in parallel so that each of the user's code is re-enterable.

All interfaces between the parallel collision detection pipeline 10 and the user's callback functions 14 and 16 are vectorized in order to employ single instruction multiple data engine capabilities in a narrow collision detection phase. User's callbacks 14 and 16 are provided by the same system that calls the collision detection pipeline 10 to process geometries, and user's callback (any 14 or 16) is a way that the user code can control the collision detection pipeline. The first stage callback 14 can mark some pairs of geometries as not required to be tested by the narrow phase collider 35. After the first callback function ends, the collision detection pipeline 10 prepares data for the narrow collider from buffered pairs of geometries. Then the particular narrow collider is called for prepared data (corresponding to type of the buffer - sphere-sphere, capsule-sphere etc.). A vector of geometry pairs is transferred to the user code, and the user code can produce information, such as contact joints 18, as vectors. The vector of geometries pairs is a vector of the geometry identifier of pairs of bodies that are specific for a particular simulation system. All the information in the vectors may be uniform so that it can be operated on efficiently by single instruction multiple data processors. This avoids the need for unnecessary repacking in the single instruction multiple data processor at the broad collision detection phase and the narrow collision detection phase.

In a pre-narrow collision detection phase ("phase 1") 14, the parallel collision detection pipeline 10 passes information about potentially colliding pairs of geometries selected at block 26 in the broad phase 20 to the user's callback function 14. The user's callback function 14 marks the pairs that do not need to be tested for exact collision detection. For the unmarked pairs, the user code provides a required number of contact points that may be detected in the narrow phase in the parallel collision detection pipeline 10 and may allocate some room for additional information that can be used in the next phase, called post-narrow phase ("phase 2") 16.

Thus, in Figure 1, in the broad phase 20, an accelerating structure storage 24 stores information about potentially colliding pairs, for selection of potential pairs of objects in broad phase block 26, based in geometries, positions, and velocities 12. The selected potentially colliding pairs 28 are reviewed by a potential colliding pairs manager 30. The colliding pairs manager 30 provides the information to the user's callback function 14 in phase one, the pre-narrow phase.

In Figure 1, the dark line indicates processes that operate in parallel. The user's callback function phase two, called post-narrow phase, indicated at block 16 in Figure 1, does not return any information to the pipeline 10 itself, but may produce contact joints for several contact points and may modify the physics "world" 19 in various ways. The only instruction for the callback function 16 is that the function can do only thread safe modification of the physics world 19, while minimizing or completely avoiding the need for synchronization between threads. Thus, the use of thread dependencies may be avoided or reduced in some embodiments.

The user's callback function phase 16 receives inputs from the actually colliding pairs manager 46. Thus, referring to Figure 1, in the pre-narrow phase, the potentially colliding pairs are identified by the manager 30. Those pairs are also provided, as indicated by arrow 32, to a potentially colliding pairs buffer 34 for each object pair type. Object pair type is a pair of types for two given objects, such as 48 and 52. Then, prepared data, already pre-grouped, is passed at 36 to the narrow phase block 35. Thus, these specific grouped data types, can be operated on in a single instruction multiple data processor in the corresponding narrow collider kernel, such as 40 and 42. A special narrow collider kernel exists for each type of buffered data, such as 40 for 48 (box-box) and 42 for 52 (sphere-sphere). The actual colliding pairs determined in the narrow phase 35 are passed, as indicated by the arrow 44, to the actually colliding pairs manager 46 that provides the information to user's callback function 16. The user code then provides the joints 18 for the world 19 which are then output, as indicated by the arrow, for graphic display.

The potentially colliding pairs manager 30 is effectively a buffer for data passed to the user code. Similarly, the actually colliding pairs manager 46 is a buffer for transferring data to the user code and, more specifically, for transferring data between the broad phase, the user's callback functions, and the narrow phase.

The potentially colliding pairs manager 30 collects potentially colliding pairs of bodies from the broad phase and converts them to vectors. The vectors are then passed to the user's callback function 14. Further, the potentially colliding pairs manager 30 classifies geometry pairs into several categories by type, as indicated by the block 32. These grouped object types are stored in the specially allocated buffers 34.

When a particular buffer for a particular geometry type is full, all the pairs of geometries from this buffer, such as the buffer 48 or 52, are passed to the narrow phase collider 35. Thus, the narrow phase collider may effectively use single instruction multiple data processing since the data is already grouped for parallel operations. The buffering is used to collect a sufficient number of pairs for calling vectorized narrow phase colliders 35. In some embodiments, the colliders 35 may use masked single instruction multiple data operations to call non-colliding pairs of objects and avoid conditional branching.

After the narrow phase in block 35, the resulting pairs 44 and contact points are passed to actually colliding pairs manager 48 that manages them and passes them through the user callback phase 16 that may change the physics world 19 according to contact points to create joints 18 and to perform other functions.

In some embodiments, the pipeline 10 is a vectorized single instruction multiple data packet based interface between broad and narrow phases of a physics simulation. It provides the data structures, storage formats, and memory allocation policies for accumulating geometries of each collider type. Two callbacks transfer vectorized data between a collision detection system and user defined code.

In accordance with some embodiments, given body geometries are divided into several groups according to the narrow collider 35 type. Several pairs of bodies are collected prior to passing them to the narrow phase collider 35. In some embodiments, this approach may lead to large data granularity and, hence, better locality and parallelization for the whole collision detection pipeline 10.

In addition, the two callback functions connect the collision detection pipeline with user defined code to enable the user to control the collision detection process and to perform some additional tasks driven by collisions employing wide single instruction multiple data engines. Thus, the use of the callback functions and the division of geometries into groups or types lead to better performance of the collision detection pipeline, in some embodiments, and enable efficient use of wide single instruction multiple data units of a processor.

In some embodiments, the pipeline 10 is implemented by a graphics processor. The pipeline 10 may be implemented in hardware or software or a combination of hardware and software.

The graphics processing techniques described herein may be implemented in various hardware architectures. For example, graphics functionality may be integrated within a chipset. Alternatively, a discrete graphics processor may be used. As still another embodiment, the graphics functions may be implemented by a general purpose processor, including a multicore processor.

In one embodiment, the broad phase collision detection algorithm 20 may use spatial hashing. In spatial hashing, objects in two or three dimensional space are projected into a one dimensional hash table to enable faster location of the objects. Spatial hashing may enable acceleration using a hash table to search for geometry pairs that potentially can collide. The spatial hashing algorithm may use a bounding volume and, in one embodiment, uses only axis-aligned bounding boxes to determine if the geometries intersect. A bounding volume is a closed volume that encompasses the objects of a set. A bounding box is a cuboid or rectangle containing an object. Where the bounding box is aligned with the axes of a coordinate system, it is called an axis-aligned bounding box. If the geometry axis-aligned bounding boxes intersect, the algorithm passes these intersecting geometries to one of the connected narrow phase colliders 35.

Infinite grids, with a cell size of 2ⁱ may be used where i is in the set {min_level, ..., and max_level}. The parameters min_level and max_level determine the usual axis-aligned bounding box sizes in the scene.

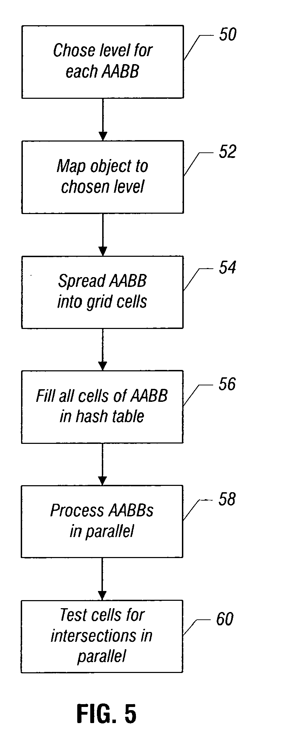

In the preparation stage of the algorithm, a level i of the grid is chosen for each axis-aligned bounding box in the scene, as indicated at block 50 of Figure 5. The level i corresponds to a specific grid step. An object is mapped to the chosen level of grid manipulation (block 52). Each axis-aligned bounding box is spread into certain grid cells according to the chosen grid level (block 54). The number of these cells varies from 1 to 8 in one embodiment. The grid level may be chosen so that the cell's properties are satisfied. All corresponding cells using all axis-aligned bounding boxes are filled in the hash table to accelerate the search for a particular cell (block 56).

In one embodiment, a special form of hash table may be used so that the preparation stage is performed over all bodies completely in parallel without data transfers between threads.

In the main stage of the algorithm, all axis-aligned bounding boxes are processed (block 58). All cells that were built for each axis-aligned bounding box are tested for intersection with all other cells with the help of the hash table (block 60). The main stage is processed in parallel with the work distributed over all of the bodies. Thus, a multicore or multiprocessor system may be used efficiently.

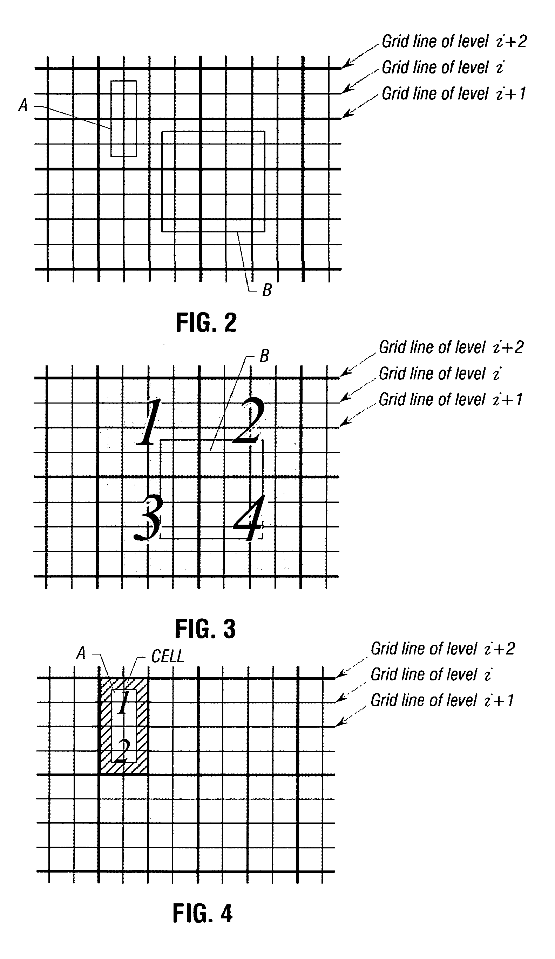

Thus, referring to Figure 2, as an example, two axis-aligned bounding boxes A and B are placed on different grid levels. The axis-aligned bounding box A is fit to the i+2 level and the axis-aligned bounding box B is fit to the i+1 level. The grid lines for the i+1 and i+2 levels are depicted.

In Figure 3, an axis-aligned bounding box B is shown at the i+2 level together with cells 1, 2, 3, and 4 that it fits within. Cells 1, 2, 3, and 4 belong to the axis aligned bounding box. Then, in Figure 4, an axis-aligned bounding box A, at the i+1 level, is shown, together with the cells 1 and 2 that it fits within.

The parallelization of the spatial hashing function facilitates the use of multicore processing and single instruction multiple database parallel processing in some embodiments.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

While the present invention has been described with respect to a limited number of embodiments, those skilled in the art will appreciate numerous modifications and variations therefrom. It is intended that the appended claims cover all such modifications and variations as fall within the true spirit and scope of this present invention.

## Claims

1. A method comprising:
in a physics simulation, grouping potentially colliding objects based on object type.

2. The method of claim 1 including accumulating a predetermined number of objects of an object type and when the predetermined number of objects of an object type is accumulated, passing the accumulated object type information to a narrow phase collider.

3. The method of claim 2 wherein accumulating objects of an object type includes accumulating objects of particular geometry.

4. The method of claim 1 including using a user callback function to couple a collision detection pipeline with user defined code to enable the user to control the collision detection process.

5. The method of claim 1 including providing output data based on object type in data sets amenable to single instruction multiple data processing.

6. The method of claim 1 including providing an input to a user callback function during broad phase collision detection.

7. The method of claim 6 including providing an input to a user callback function during narrow phase collision detection.

8. The method of claim 1 including using parallel spatial hashing for broad phase collision detection.

9. The method of claim 8 including using multicore processing for said spatial hashing.

10. A collision detection apparatus comprising:
a broad phase collision detection unit; and
a narrow phase collision detection unit coupled to said broad phase collision detection unit, said narrow phase collision detection unit grouping potentially colliding objects based on object type.

11. The apparatus of claim 10 wherein said narrow phase collision detection unit to accumulate a predetermined number of objects of an object type and when the predetermined number of objects of an object type is accumulated, pass the accumulated object type information to a narrow phase collision detection unit.

12. The apparatus of claim 11 wherein said narrow phase collision detection unit to accumulate objects of an object type by accumulating objects of a particular geometry.

13. The apparatus of claim 10 further including a manager to use a user callback function to link the apparatus with user defined code to enable the user to control broad and narrow phase collision detection.

14. The apparatus of claim 10 wherein said apparatus to include a single instruction multiple data processor.

15. The apparatus of claim 14 wherein said processor is a multicore processor.
